# EUROPÄISCHE PATENTANMELDUNG

(11) **EP 1 638 186 A1**
(43) Veröffentlichungstag der Anmeldung: **22.03.2006**
(21) Anmeldenummer: 05019743.3
(22) Anmeldetag: 10.09.2005
(51) Int. Cl.: H02K 1/14, H02K 15/02

(54) **Stator einer elektrischen Maschine und Verfahren für seiner Herstellung**

(30) Priorität: 21.09.2004 DE 102004045659
(71) Anmelder: Bosch Rexroth AG, 70184 Stuttgart (DE)
(72) Erfinder: Groening, Ingolf, 97816 Lohr am Main (DE); Hahn, Ingo, 97816 Lohr am Main (DE); Kunkel, Helmut, 97859 Wiesthal (DE); Bach, Joachim, 97753 Karlstadt (DE)

(57) **Zusammenfassung**

Elektrische Maschine mit einem mehrteilig ausgebildeten Primärteil mit Polen (1), auf dem vorgefertigte Wicklungen (4) angebracht sind und der Wickelraum möglichst vollständig abgeschlossen ist, wobei ein Pol (1) einen T-förmigen Querschnitt aufweist und mittels eines Steges (7) und eines Kopfes (6) gebildet ist und der Steg (7) an seiner dem Kopf (6) gegenüberliegenden und parallel zu diesem ausgerichteten Stirnseite eine zur Symmetrieachse symmetrische und sich über die gesamte Länge erstreckende Stirnausnehmung (2) aufweist. Die durch die Stirnausnehmung gebildeten Stegvorsprünge werden anschließend so umgeformt, daß sie einen Polfuß bilden. Alternativ dazu wird der Polfuß durch eine formschlüssige Verbindung mit dem Steg vereint.

## Beschreibung

Die Erfmdung entspringt der Gattung der dynamoelektrischen Maschinen und zeigt verschiedene Ausgestaltungsformen von Maschinenbauteilen und ein Verfahren zur Herstellung derartiger Maschinen gemäß den Oberbegriffen der unabhängigen Ansprüche.

Es sind zahlreiche Vorrichtungen und Verfahren aus dem Stand der Technik bekannt, welche die Herstellung einer elektrischen Maschine mittels Einzelkomponenten ermöglichen. In der Regel wird der Statorring eines Innen- oder Außenläufers mittels Einzelkomponenten zunächst zusammengebaut und dann mittels einer äußeren Führung, z.B. eines Trägerrohres, fixiert.

Die Offenlegungsschrift DE 101 19 642 A1 zeigt einen Statorring mit einem außen sechseckig und innen ringförmig ausgebildeten Joch, bestehend aus einem Blechpaket mit Längsaussparungen und daran innenseitig anliegenden Wicklungen, welche auf separaten und herausnehmbaren Spulenträgern aufgebracht sind. Die Konfiguration umfasst bewickelte Pole und unbewickelte Zwischenpole, wobei die unbewickelten Pole einstückig vom Statorring umfasst sind.

Die Offenlegungsschrift GB 2 224 399 A zeigt einen Stator bestehend aus einer Vielzahl von Einzelsegmenten, um die Herstellung und Bewicklung zu vereinfachen. Die Einzelsegmente werden nach der Bewicklung zusammengesetzt und bilden so den Stator mit Wicklung.

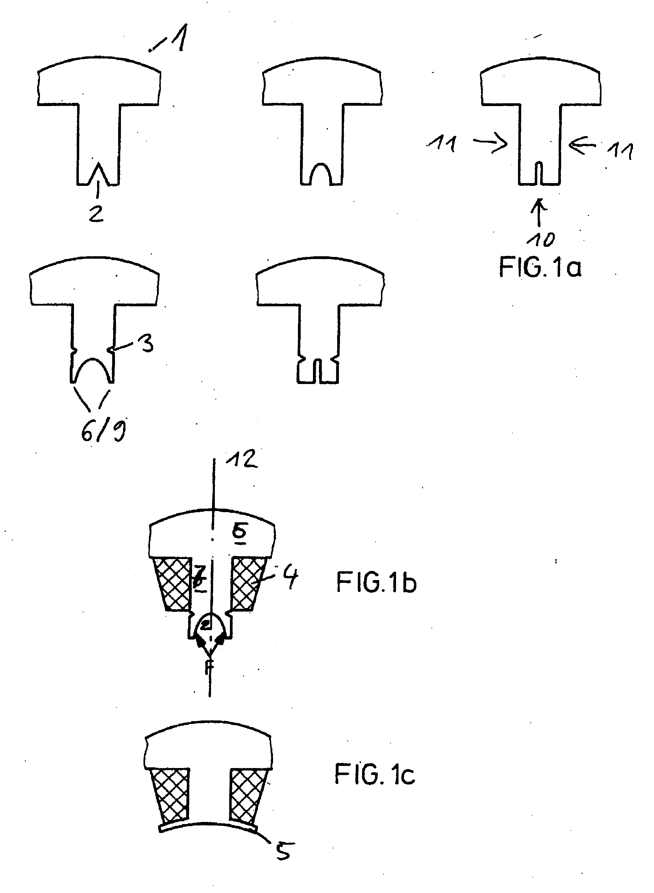

Die Patentschrift DE 196 43 561 Cl zeigt den möglichen Aufbau eines Statorringes in den Figuren 1 bis 8 mittels identischer oder mittels T- bzw. X-förmiger Einzelsegmente, welche zunächst separat bewickelt und anschließend zum Statorring zusammengefügt werden können. Die Segmente bilden, nachdem sie zusammengefügt wurden, gleichzeitig die Außenhaut des Stators. Dieses Dokument umfast alle technischen Merkmale des Oberbegriffes der Erfindung und stellt den nächstliegenden Stand der Technik dar. Die hier gezeigten polbildenden Einzelsegmente sind jedoch so realisiert, dass sie, wie in Figur 7 und 8 dargestellt, sich gegenseitig ergänzen müssen, um eine Wickelkammer mit Nutschlitzen zu bilden. Die alternativ in Figur 5 und 6 dargestellte Lösung zeigt, dass der Wickelraum nicht vollständig abgeschlossen ist und bei dieser Ausführungsform auch ein direktes Aufwickeln der Wicklungen auf die gewindeartigen Rillen am T-Segment unter mechanischer Spannung erforderlich wird. Ein nicht abgeschlossener. Wickelraum beeinträchtigt unter anderem die Ausbildung des magnetischen Flusses und vermindert den rotorseitigen Schutz der Wicklungen nach außen und zu benachbarten Wicklungen:

Der Erfindung liegt daher die Aufgabe zugrunde eine Maschine der Eingangs genannten Art sowie ein Verfahren zu ihrer Herstellung derart zu gestalten, dass insbesondere vorgefertigte Wicklungen verwendet werden können, wobei der Wickelraum möglichst vollständig abgeschlossen werden soll und sich ein möglichst hoher Kupferfüllfaktor einstellen soll. Zusätzlich wird eine kostengünstige Realisierung gefordert.

Die Erfindung zeigt neue, bisher nicht bekannte Wege auf, wie das mehrteilige Primärteil einer elektrischen Maschine realisiert werden kann. Dies geschieht erfindungsgemäß dadurch, dass ein Pol eines Primärteiles einen T - förmigen . Querschnitt aufweist und mittels eines Steges und eines Kopfes gebildet ist, wobei der Steg an seiner dem Kopf gegenüberliegenden und parallel zu diesem ausgerichteten Stirnseite eine zur Symmetrieachse symmetrische und sich über die gesamte Länge erstreckende Stirnausnehmung aufweist.

Das Primärteil stellt dabei die ortsfeste Komponente der elektrischen Maschine dar. Bei einem rotationssymmetrischen Motor wäre dies beispielsweise der Stator. Prinzipiell könnte es sich aber auch um das Primärteil eines Linearmotors handeln. Das Primärteil ist in der Regel als Blechpaket aus laminierten Blechen aufgebaut, wobei die Bleche mittels Stanz-, Press-, Klebe- oder Schweißverfahren miteinander verbunden sind. Die Auswahl anderer geeigneter Materialien liegt im Ermessen des Fachmannes.

Die erfindungsgemäße T-Form des Pols, welche mittels eines Steges und eines Kopfes gebildet ist, ermöglicht es, die Wicklung schnell und einfach am Pol anzubringen, zum Beispiel mittels einfachen Aufschiebens vorzugsweise extern hergestellter Wicklungen oder mittels direkt aufgebrachter Wicklungen. Die sich über die gesamte Länge ausgebildete Stirnausnehmung an der dem Kopf gegenüberliegenden Stegstirnseite bildet aufgrund ihrer Symmetrie zwei identische stirnseitige Schenkel, welche durch einfaches Verformen im wesentlichen senkrecht zum Steg und damit praktisch parallel zum Kopf ausgerichtet werden können. Somit ist mittels des Kopfes und eines nachträglich herstellbaren Fußes die Wicklung sicher am Steg fixiert. Die verformten Fußschenkel ragen über den Wickelraum hinaus und schließen diesen schützend ab. Aufgrund der Teilummantelung der Wickelräume mittels des Kopfes und Fußes können diese zusätzlich Kupfer fassen, was den Kupferfüllfaktor erhöht und die Kraftdichte der Maschine verbessert. Aufgrund der Symmetrie der Pole sind diese einfach und kostengünstig mittels weniger Herstellungsschritte in großen Stückzahlen herstellbar. Die kennzeichnenden technischen Merkmale erfüllen damit die in der Aufgabe dargestellten Forderungen vollständig.

Bevorzugt weist der Steg jeweils an seinen Seitenflächen eine sich über die gesamte Länge erstreckende Seitenausnehmung auf, welche auf Bodenniveau der Stirnausnehmung angeordnet ist und parallel zu dieser verläuft. Dies erleichtert das Verformen der Schenkel, weil das Material auf der zu stauchenden Seite reduziert wurde und gleichzeitig eine Biegekante entsteht, so dass ein präzises Verformen ermöglicht wird.

Ergänzend könnte der Kopf anstelle einer einstückigen Realisierung mit dem Steg mittels einer Formschlussverbindurig am Steg angebracht sein, wodurch sich die Flexibilität beim Aufbringen der Windungen erhöht, beispielsweise durch Aufbringen des Kopfes erst nach der Bewicklung. Hierzu wäre eine mechanische Verbindung empfehlenswert, die mittels zueinander korrespondierender Ausnehmungen und Vorsprünge realisiert ist. Dies gewährleistet eine einfache Montage und einen sicheren Halt.

Die Erfindung löst die Aufgabe alternativ dadurch, dass ein Pol eine Symmetrieachse und einen T-förmigen Querschnitt aufweist und mittels eines Steges und eines Kopfes gebildet ist, wobei an der dem Kopf gegenüberliegenden Stirnseite des Steges ein zur Symmetrieachse symmetrisches und sich über die gesamte Länge erstreckendes Fußteil mittels einer Formschlussverbindung angebracht ist.

Es stellen sich hier die gleichen Vorteile wie bei der bereits weiter oben genannten ersten Lösung ein. Die Herstellung des Poles ist hierbei allerdings vereinfacht, da das Umformen entfällt und der Fuß am Steg als separates Teil angebracht wird. Die Formschlussverbindung stellt gleichzeitig eine Führung dar. Auch hier ist mittels des Fußes die Wicklung sicher am Steg fixiert, wobei die Fußschenkel über den Wickelraum hinaus ragen und diesen zum Sekundärteil abgrenzen bzw. abschließen. Aufgrund der mittels des Kopfes und des Fußes ausgebildeten Wickelräume können diese zusätzlich Kupfer fassen, was den Kupferfüllfaktor erhöht und die Kraftdichte der Maschine verbessert. Wegen der Symmetrie der Pole sind diese einfach und kostengünstig mittels weniger Herstellungsschritte in großen Stückzahlen herstellbar. Bevorzugt wird auch hier der Kopf mittels einer Formschlussverbindung am Steg angebracht, um die gleichen Vorteile wie bei der ersten Lösung zu erreichen.

Besonders zu empfehlen ist es, dass die Formschlussverbindung mittels zueinander korrespondierender Ausnehmungen und Vorsprünge (z.B. schwalbenschwanzförmig) realisiert ist, damit sich ein sicherer Halt und eine optimale Führung bei der Montage ergibt.

Die Erfindung ermöglicht die Realisierung eines elektrischen Motors mit einem mehrteilig ausgebildeten Primärteil mit Polen, insbesondere nach einer der zuvor genannten Ausführungsformen und bringt die erfindungsgemäßen Vorteile besonders dann zur Geltung, wenn das Primärteil aus Einzelsegmenten besteht, welche zusammengefügt dasselbige bilden. Aus diesem Konzept resultiert ein preiswert herstellbarer Elektromotor mit hohem Kupferfüllfaktor und geschlossenen Nuten. Zusätzliche Vorteile sind eine hohe Kraftdichte, hohes Drehmoment und reduzierte Drehmomentwelligkeit aufgrund reduzierter Rastmomente bei vereinfachter Produktionstechnik. Vergleichbare Resultate erreicht man, wenn das Primärteil über den Umfang verteilte Poleinschübe umfasst und die korrespondierenden Pole entsprechend der Erfindung realisiert sind. Es wird hiermit auf die Schrift DE 101 19 642 A1, Figur 1 und 3 mit korrespondierender Figurenbeschreibung verwiesen. Hier ist das prinzipielle Konzept derartiger Poleinschübe gezeigt und der Fachmann ist aufgefordert bei der Realisierung erfindungsgemäßer Ausgestaltungen für derartige Primärteile sich an der zitierten Schrift zu orientieren.

Die Erfindung trägt zu einem vereinfachten Verfahren für die Herstellung einer elektrischen Maschine mit identisch ausgebildeten Polen, insbesondere bei der Aufbringung der Wicklung bei, indem zunächst die Pol-Wicklung auf den Steg oder einen Wicklungskern aufgebracht wird, bevor der Wickelraum abgeschlossen wird. Die Wicklung muss dabei nicht umständlich um die seitlich hervorragenden Kopf- und Fußschenkel geführt werden, sondern kann ohne Behinderung durch Kopf und/oder Fuß zunächst am Steg oder Wicklungskern angebracht werden.

In der folgenden Beschreibung wird auf die verschiedenen Ausgestaltungsformen der Erfmdung eingegangen. Die Figuren zeigen schematisch das der Erfindung zugrundeliegende Prinzip.

### Bezugszeichenliste

- 1: Pol
- 2: Stirnausnehmung
- 3: Seitenausnehmung
- 4: Wicklung
- 5: Fuß
- 6: Kopf
- 7: Steg
- 8: Formschlußverbindung
- 9: Strinseitige Schenkel
- 10: Stirnseite
- 11: Seitenflächen
- 12: Symmetrieachse

Es zeigen:
Figur 1a: Verschiedene Ausgestaltungsformen eines einteiligen Pol-Rohlings.
Figur 1b: Eine auf den Pol-Rohling aufgebrachte Wicklung.
Figur 1c: Den fertigen und bewickelten Pol.
Figur 2a: Einen zu Figur 1a alternativ ausgestalteten zweiteiligen Pol-Rohling.
Figur 2b: Eine auf den Pol-Rohling aufgebrachte Wicklung.
Figur 2c: Den fertigen und bewickelten Pol.

Der einteilige Rohling 1 aus Figur 1a umfasst ein Kopfteil 6, einen Steg 7 und eine entlang der Längsachse des Stegs 7 ausgebildete Nut 2, welche auf der dem Kopfteil 6 gegenüberliegenden Stirnseite 10 des Steges 7 spiegelbildlich zur Symmetrieachse angeordnet ist. Diese Nut kann V-förmig, U-förmig und mehr oder weniger breit ausgeführt sein. Andere zweckmäßige Nutprofile sind denkbar und liegen im Ermessen des fachmännischen Könnens. An der Seitenfläche 11 des Steges 7 ist optional eine weitere Nut 3 dargestellt, welche ebenfalls V- oder U-förmig ausgebildet sein kann. Diese Nut 3 ist beidseitig gleichmäßig vom Kopf 6 beabstandet und auf dem Niveau des Bodens der stirnseitigen Nut 2 und parallel zu dieser verlaufend angeordnet. Die Nut 3 verläuft entlang der gesamten Rohlingslänge und soll das Umbiegen der Schenkel 9 vereinfachen, da sie das Material, welches beim Biegen komprimiert werden müsste, bereits ausspart.

In Figur 1b ist ein Rohling 1 mit am Steg 7 aufgebrachter Wicklung 4 dargestellt. Die Wicklung 4 wurde entweder direkt auf den Steg aufgewickelt oder separat gefertigt und anschließend von der Stegseite 10 aufgeschoben. Zur Formung der Wicklungsaußenkanten und Optimierung des Kupferfüllfaktors wird das Wicklungspaket üblicherweise noch verpresst. Zusammen mit dem Kern 6, 7 und 5 entsteht nach dem Bewickeln ein trapezähnlicher Querschnitt der Gesamtanordnung. In Figur 1b ist zusätzlich noch eine Kraft F angedeutet. Diese Kraft F muß aufgebracht werden, um die Schenkel mit geeignetem Werkzeug in die in Figur 1c dargestellte Form zu bringen.

Figur 1c zeigt den fertigen Pol, welcher einen annähernd H-förmigen Querschnitt mit bogenförmiger oberer und unterer Begrenzung aufweist und zwischen Steg 7, Kopf 6 und Fuß 5 die Wicklung so umfasst, dass diese möglichst nicht über die Abmessungen des Blechpaketes 1 hinausragt. Aufgrund der bogenförmigen Ausbildung von Kopf 6 und Fuß 5 stellt der Pol 1 ein Segment eines Ringes dar. Fügt man mehrere gleichartige dieser Segmente zusammen, so erhält man einen aus Einzelsegmenten aufgebauten zylindrischen Körper, dessen Wanddicke durch die Abmessungen der Kopf- und Fußbreite sowie der Steghöhe festgelegt ist. Der Bogenradius bestimmt weiterhin den Durchmesser des Zylinders. Ein solcher Zylinder kann beispielsweise als Stator eines Motors fungieren, welcher gleichmäßig über den Umfang verteilte Pole umfasst.

Ergänzend sei an dieser Stelle bemerkt, dass nicht jeder Pol zwingend zu bewickeln ist. Es existieren auch Konzepte, bei denen sich bewickelte und unbewickelte Pole oder Polgruppen am Umfang verteilt abwechseln. Die Verwendung des erfindungsgemäßen Prinzips wird sowohl für die Realisierung bewickelter als auch unbewickelter Pole empfohlen.

Ebenso denkbar wäre es, die Pole nachträglich in einen zylinderförmigen Stator mit entsprechenden Aussparungen in seiner Zylinderwandung einzuschieben, so dass man ebenfalls einen Stator mit gleichmäßig über den Umfang verteilten Polen erhält.

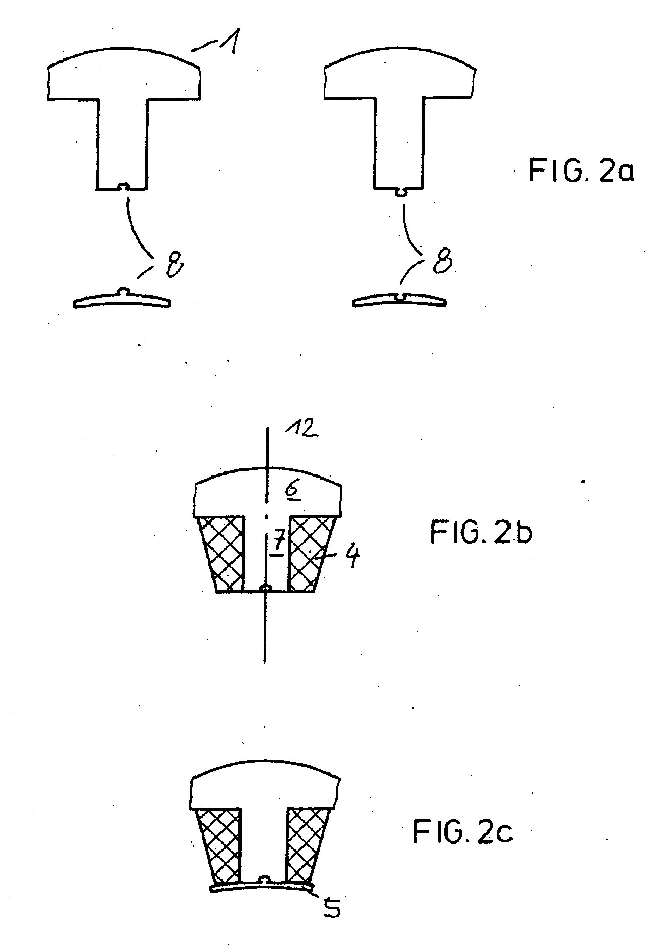

Eine alternative Ausführung eines Pol-Rohlings 1 zeigen die Figuren 2a bis 2c. Hier gilt das bezüglich Figur 1a bis 1c zuvor gesagte, wobei der Pol-Rohling 1 hier von vornherein mehrstückig ausgebildet ist und der Fuß 5 nicht mittels Umformung des Steges 7, sondern mittels eines separaten Bauteils 5 realisiert ist, welches formschlüssig durch Verwendung einer geeigneten Verbindungsmethode 8 mit dem Steg 7 verbunden ist.

In allen zuvor genannten Fällen wäre es denkbar den Kopf 6 ebenfalls mittels formschlüssiger Verbindung 8 durch ein ebenso separates Kopfteil oder aber mittels Umformung der dem Fuß gegenüberliegenden Stegseite zu realisieren. Auch die Verwendung der in Figur 2a bis 2c gezeigten Lösung zur Realisierung eines mehrteiligen und segmentbasierten Stators wird hiermit nahegelegt bzw. empfohlen.

## Patentansprüche

1. Bauteil für eine elektrische Maschine, **dadurch gekennzeichnet, dass** dieses einen T-förmigen Querschnitt aufweist, der mittels eines Steges (7) und eines Kopfes (6) gebildet ist, wobei der Steg (7) an seiner dem Kopf (6) gegenüberliegenden und parallel zu diesem ausgerichteten Stirnseite (10) eine zur Symmetrieachse (12) im wesentlichen symmetrische und sich längs erstreckende Stirnausnehmung (2) aufweist.

2. Bauteil nach Anspruch 1, **dadurch gekennzeichnet, dass** der Steg (7) jeweils an seinen. Seitenflächen (11) eine sich über die gesamte Länge erstreckende Seitenausnehmung (3) aufweist, welche auf Bodenniveau der Stirnausnehmung (2) angeordnet ist und parallel zu dieser verläuft.

3. Bauteil nach Anspruch 1 oder 2, **dadurch gekennzeichnet, dass** der Kopf (6) mittels einer Formschlussverbindung (8) am Steg (7) angebracht ist.

4. Bauteil nach Anspruch 3, **dadurch gekennzeichnet, dass** die Formschlussverbindung (8) mittels zueinander korrespondierender Ausnehmungen und Vorsprünge realisiert ist.

5. Bauteil nach einem der vorhergehenden Ansprüche 1 bis 2, **dadurch gekennzeichnet, dass** die in der Ebene der Seitenflächen (11) verlaufenden und die Stirnausnehmung (2) begrenzenden Stegvorsprünge so umgeformt sind, dass diese einen Fuß (5) bilden, wobei sich zusammen mit Steg (7) und Kopf (6) ein H-förmiger Querschnitt ergibt.

6. Bauteil nach einem der vorhergehenden Ansprüche, **dadurch gekennzeichnet, dass** dieses einen bewickelten oder unbewickelten Pol umfasst.

7. Bauteil für eine elektrische Maschine, **dadurch gekennzeichnet, dass** dieses einen T - förmigen Querschnitt mit Symmetrieachse aufweist, der mittels eines Steges (7) und eines Kopfes (6) gebildet ist und an der dem Kopf (6) gegenüberliegenden Stirnseite (10) des Steges (2) ein zur Symmetrieachse (12) im wesentlichen symmetrisches und sich längs erstreckendes Fußteil (5) mittels einer Formschlussverbindung (8) angebracht ist.

8. Bauteil nach Anspruch 7, **dadurch gekennzeichnet, dass** der Kopf (6) mittels einer Formschlussverbindung (8) am Steg (7) angebracht ist.

9. Bauteil nach einem der Ansprüche 7 oder 8, **dadurch gekennzeichnet, dass** die Formschlussverbindung (8) mittels zueinander korrespondierender Ausnehmungen und Vorsprünge realisiert ist.

10. Elektrische Maschine mit einem mittels Bauteilen realisierten Primärteils, **dadurch gekennzeichnet, dass** ein Bauteil (1) insbesondere nach einem der Ansprüche 1 bis 9 ausgebildet ist.

11. Elektrische Maschine mit einem einteilig ausgebildeten Primärteil mit in Ausnehmungen eingefügten Polen (1), **dadurch gekennzeichnet, dass** die Pole (1) als Bauteile nach einem der Ansprüche 1 bis 9 realisiert sind.

12. Verfahren zur Herstellung einer elektrischen Maschine mit einem Bauteil nach einem der Ansprüche 1 bis 9, **dadurch gekennzeichnet, dass** gemäß der folgenden Schritte unter Beachtung der Reihenfolge
- zunächst die Pol-Wicklung (4) auf den Steg (7) aufgebracht wird und
- anschließend der Wickelraum unter Verwendung eines vom Steg (7) umfassten Fuß-(5) und/oder Kopfteiles (6) abgegrenzt wird.
